# EUROPEAN PATENT SPECIFICATION

(11) **EP 2 169 986 B1**
(45) Date of publication and mention of the grant of the patent: **29.08.2012**
(21) Application number: 09170774.5
(22) Date of filing: 18.09.2009
(51) Int. Cl.: H04W 72/12

(54) **Controlling the transmission timing of a multicast packet**
Steuerung der Übertragungszeit eines Multicast-Pakets
Commande de la synchronisation de transmission d'un paquet de multidiffusion

(30) Priority: 26.09.2008 JP 2008248435
(43) Date of publication of application: 31.03.2010
(73) Proprietor: NTT DoCoMo, Inc., Tokyo 100-6150 (JP)
(72) Inventor: Igarashi, Kei, Tokyo 100-6150 (JP); Yamada, Akira, Tokyo 100-6150 (JP)
(74) Representative: Viering, Jentschura & Partner

(56) References cited:
- US-A1- 2005 114 537
- US-A1- 2005 201 341
- US-A1- 2005 254 444
- US-A1- 2007 230 441
- US-A1- 2008 123 577

## Description

### BACKGROUND OF THE INVENTION

### Field of the Invention

The present invention relates to a wireless communication system, wireless communication station and wireless communication method.

### Related Background Art

Recently wireless LAN interfaces are installed in various devices. In particular, the popularization of the IEEE 802.11 standard for personal computers, home electronic products and portable terminals is remarkable. IEEE 802.11 is a standard that specifies the wireless LAN technology for layer 2, particularly for the MAC or lower layers. In ANSI/IEEE Std. 802.11, 1999 Edition (R2003) Information technology-Telecommunications and information exchange between systems - Local and metropolitan area networks - Specific requirements - Part 11:
Wireless LAN Medium Access Control (MAC) and Physical Layer (PHY) Specifications, a wireless LAN technology according to the IEEE 802.11 standard is disclosed. Here wireless communication using the wireless LAN conforming to the IEEE 802.11 standard is described. A case of an access point (access point of the wireless LAN conforming to IEEE 802.11 standard) and one or more stations (e.g. portable stations) performing wireless communication using the wireless LAN conforming to the IEEE 802.11 standard is considered. When at least one station, which is set in PS (Power Save) mode, is included in all the stations under the access point, if the access point receives a broadcast packet and multicast packet from an external communication network, the access point once buffers the broadcast packet and multicast packet in a memory of the access point, sends a DTIM (Delivery Traffic Indication Message) beacon to indicate this information to stations, and sends the buffering broadcast packet and multicast packet to all the stations at the transmission cycle of this DTIM beacon. The PS mode, which is a communication operation of the wireless LAN interface which periodically and alternately repeats ON (Awake state) and OFF (Doze state) may be called an "intermittent reception mode".

The station notifies the access point whether the communication operation is set to PS mode, that is, whether communication operation is set to PS mode or Active mode (communication operation in which the wireless LAN interface is always ON). If the communication operation is set to PS mode, the station sets a power management bit, which is included in a frame control field of a MAC header in a packet to be sent to the access point, to "1", and if the communication operation is not set to PS mode (is set to Active mode), the station sets the power management bit to "0". When this packet is received, the access point analyzes this packet and judges whether there is a station which is set to PS mode.

If it is decided that there is at least one station being set to PS mode, the access point buffers the broadcast packet and multicast packet, and sends the buffered broadcast packet and multicast packet to all the subordinate stations at a transmission cycle of the DTIM beacon in which data to notify this information is set. In this case, all the stations under the access point can receive the multicast packet only at the transmission cycle of the DTIM beacon, so if the multicast packet is such a real-time application as video streaming, quality deterioration such as delay jitter is generated. This quality deterioration of a multicast packet in a real-time application can be avoided if the station performs communication operation in Active mode. However in the case when a station which receives the multicast packet and a station which does not receive the multicast packet coexist under the access point, even if all the stations which receive the multicast packet are operated in Active mode, stations which does not receive the multicast packet may still operate in PS mode, and if so, the multicast packet is transmitted from the access point only at the transmission cycle of the DTIM beacon, and as a result, quality deterioration of the multicast packet is generated.

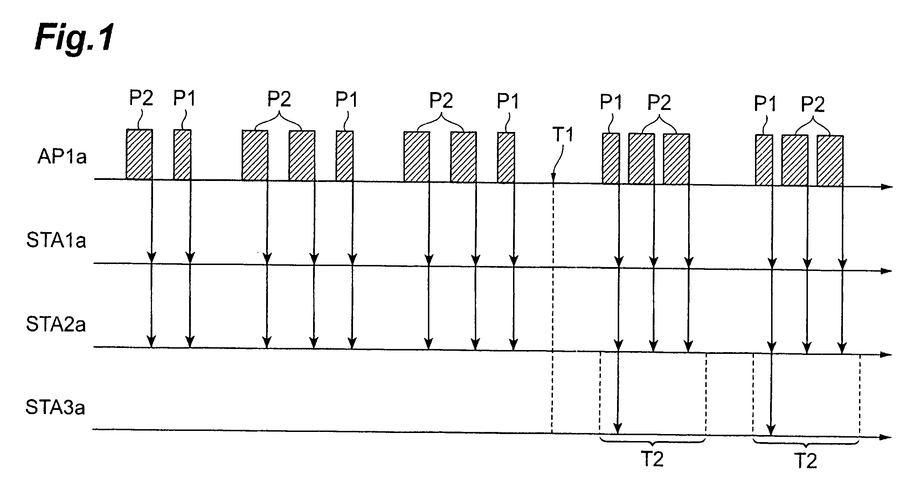

The above problem will now be described in concrete terms with reference to Fig. 1. It is assumed that an access point AP1a and wireless communication stations STA1a and STA2a are connected for communication via a wireless LAN conforming to the IEEE 802.11 standard. The wireless communication stations STA1a and STA2a are assumed to be set to Active mode. Since the wireless communication stations STA1a and STA2a are in Active mode, the access point AP1a can send a multicast packet at any timing.

Here it is assumed that a wireless communication station STA3a (station) in PS mode, which does not receive the multicast packet, is newly connected to the access point AP1a for communication at time T1, for example. In the case of a wireless LAN conforming to the IEEE 802.11 standard, if there is at least one station, out of all the stations under the access point, operating for communication in PS mode, the access point once buffers the broadcast packet and multicast packet in a memory of the access point, and sends the buffered broadcast packet and multicast packet to all the wireless communication stations (stations) at the transmission cycle of the DTIM beacon. Although the wireless communication stations STA1a and STA2a are set to Active mode, the multicast packet can be received only at the packet reception period T2 of the transmission cycle of the DTIM beacon after time T1. The transmission cycle of the DTIM beacon is normally set to several hundred ms, so the packet transmission delays and communication quality deteriorates. In this way, the transmission timing of the multicast packets to be received by the wireless communication stations STA1a and STA2a is restricted by the wireless communication station STA3a, which does not receive the multicast service in-operation for communication in PS mode. With the foregoing in view, it is an object of the present invention to suppress quality deterioration of the multicast packet due to transmission delay jitter.

The patent publication US 2005/0114537 A1 discloses a method for providing a superior quality of service for multicast data streams delivered over a wireless local area network. As Internet Protocol multicast data streams are received by an access point, the access point observes Internet Group Multicast Protocol registration messages to determine which of its associated stations subscribe to each multicast data stream. The access point then determines which of the multicast data streams it receives have only active subscribing stations as opposed to those data streams having at least one associated station operating in power-save mode. The access point will automatically transmit each multicast data stream having only active subscribers immediately to the associated active stations, while buffering the multicast data stream for which there is at least one associated station operating in power-save mode.

### SUMMARY OF THE INVENTION

A wireless communication system of the present invention is a wireless communication system comprising an access point for performing wireless communication according to a packet transmission system which allocates wireless bands by CSMA/CA(Carrier Sense Multiple Access with Collision Avoidance), and one or more wireless communication stations, the wireless communication station comprises: multicast reception information generation unit for generating a packet which includes multicast reception information to indicate whether a multicast packet is to be received or not; multicast reception information transmission unit for transmitting a packet, which is generated by the multicast reception information generation unit, and includes the multicast reception information, to the access point; communication operation information generation unit for generating a packet which includes communication operation information to indicate whether communication operation for the wireless communication is set to an intermittent reception mode or not; and communication operation information transmission unit for transmitting a packet, which is generated by the communication operation information generation unit and includes the communication operation information, to the access point, and the access point comprises: reception unit for receiving a packet transmitted from the wireless communication station; extraction unit for extracting identification information for identifying the wireless communication station which has transmitted the packet, the multicast reception information and the communication operation information from the packet received by the reception unit; and transmission control unit for controlling a transmission timing of a multicast packet to the wireless communication station based on the identification information, the multicast reception information and the communication operation information, which are extracted by the extraction unit.
In the wireless communication system of the present invention, the wireless communication station further comprises setting cancellation unit for canceling the intermittent reception mode if the communication operation is set to the intermittent reception mode when setting to start reception of a multicast packet is input, and for setting the communication operation to the intermittent reception mode if setting to end reception of the multicast packet is input. According to this, even if the communication operation is set to the intermittent reception mode, the intermittent reception mode is canceled when a multicast packet is received, therefore the access point need not buffer the multicast packet. Hence quality deterioration of the multicast packet due to transmission delay jitter can be suppressed while implementing power saving by the intermittent reception mode.
It is preferable that the wireless communication system further comprises table information generation unit for generating table information associating the identification information, the multicast reception information and the communication operation information extracted by the extraction unit, and storing the table information in a memory, wherein the transmission control unit controls the transmission timing based on the table information stored in the memory by the table information generation unit.

According to the wireless communication system of the present invention, the access point can control the transmission timing of a multicast packet to the wireless communication station based on the communication operation information to indicate whether the communication operation is set to the intermittent reception mode or not and the MC reception information to indicate whether a multicast packet is to be received or not for each wireless communication station. Therefore when all the wireless communication stations which receive the multicast packet are not set to the intermittent reception mode, for example, the multicast packet can be immediately transmitted, and quality deterioration of the multicast packet due to transmission delay jitter can be suppressed.

In the wireless communication system of the present invention, it is preferable that the multicast reception information is 1 bit of information to indicate whether a multicast packet is to be received or not. According to this, whether the multicast packet can be received or not can be notified to the access point merely by adding 1 bit of multicast reception information to the conventional packet configuration.

In the wireless communication system of the present invention, it is preferable that the multicast reception information indicates a part or all of a multicast address of a reception target multicast packet. Since a part or all of the multicast address is used for the multicast reception information, the transmission timing of the multicast packet can be set according to the multicast address.

In the wireless communication system of the present invention, it is preferable that the multicast reception information generation unit generates an association request packet which includes the multicast reception information. According to this, the multicast reception information can be notified to the access point in association with the access point. Hence a packet need not be sent merely for notifying the multicast reception information, which makes use of wireless media efficient.

In the wireless communication system of the present invention, it is preferable that the multicast reception information generation unit generates a data packet or control packet which includes the multicast reception information. According to this, if the multicast reception information is set in a data packet or control packet to be transmitted during communication with the access point, the multicast reception information can be notified during communication with the access point. Hence a packet need not be sent merely for notifying the multicast reception information, which makes use of wireless media efficient.

In the wireless communication system of the present invention, it is preferable that the multicast reception information generation unit generates a request packet including the multicast reception information and requesting reception of a multicast packet. According to this, the multicast reception information can be notified to the access point when the multicast packet reception is requested. Hence a packet need not be sent merely for notifying the multicast reception information, which makes use of wireless media efficient.

In the wireless communication system of the present invention, it is preferable that when a multicast packet transmitted from an external communication network is received by the reception unit of the access point, if there is at least one wireless communication station which is set to receive a multicast packet received by the reception unit and set to the intermittent reception mode, the transmission control unit of the access point buffers the multicast packet received by the reception unit in a memory of the access point, and controls the transmission timing so as to transmit the buffered multicast packet at a transmission cycle of a DTIM beacon, and if there is no wireless communication station which is set to receive a multicast packet received by the reception unit and set to the intermittent reception mode, the transmission control unit of the access point controls the transmission timing so as to transmit the multicast packet received by the reception unit without using the DTIM beacon. According to this, if all the wireless communication stations are not set to the intermittent reception mode, a multicast packet is transmitted without buffering, so quality deterioration of the multicast packet due to transmission delay jitter can be avoided. If there is at least one wireless communication station being set to the intermittent reception mode, the multicast packet is buffered so as to support the intermittent reception mode, therefore the multicast packet can be received with certainty. This processing is executed for each multicast packet received by the access point.

A wireless communication station of the present invention is a wireless communication station which performs wireless communication with an access point, according to a packet transmission system which allocates wireless bands by CSMA/CA, comprising: multicast reception information generation unit for generating a packet which includes multicast reception information to indicate whether a multicast packet is to be received or not; multicast reception information transmission unit for transmitting a packet, which is generated by the multicast reception information generation unit, and includes the multicast reception information, to the access point; communication operation information generation unit for generating a packet which includes communication operation information to indicate whether communication operation for the wireless communication is set to an intermittent reception mode or not; communication operation information transmission unit for transmitting a packet, which is generated by the communication operation information generation unit, and includes the communication operation information, to the access point; and a setting cancellation unit for canceling the intermittent reception mode if the communication operation is set to the intermittent reception mode when setting to start reception of a multicast packet is input, and for setting the communication operation to the intermittent reception mode if setting to end reception of the multicast packet is input.

According to the wireless communication station of the present invention, multicast reception information to indicate whether the multicast packet is to be received or not and communication operation information to indicate whether the communication operation is set to the intermittent reception mode or not are notified from the wireless communication station to the access point. The access point can control the transmission timing of the multicast packet to the wireless communication station using the multicast reception information and communication operation information notified from the wireless communication station. Therefore when all the wireless communication stations which receive the multicast packet are not set to the intermittent reception mode, for example, the multicast packet can be transmitted immediately, and quality deterioration of the multicast packet due to transmission delay jitter can be suppressed.

A wireless communication method of the present invention is a wireless communication method for an access point and one or more wireless communication stations to perform wireless communication according to a packet transmission system which allocates wireless bands by CSMA/CA, comprising: a transmission step of the wireless communication station transmitting, to the access point, multicast reception information to indicate whether the wireless communication station receives a multicast packet or not, and communication operation information to indicate whether communication operation for the wireless communication station to perform the wireless communication is set to an intermittent reception mode or not; an extraction step of the access point extracting identification information for identifying the wireless communication station which has transmitted the packet, the multicast reception information and the communication operation information, from the packet transmitted from the wireless communication station to the access point in the transmission step; a transmission control step of the access point controlling a transmission timing of a multicast packet to the wireless communication station based on the identification information, the multicast reception information and the communication operation information, which are extracted in the extraction step , and a setting cancellation step of the wireless communication station canceling the intermittent reception mode if the communication operation is set to the intermittent reception mode when setting to start reception of a multicast packet is input, and setting the communication operation to the intermittent reception mode if setting to end reception of the multicast packet is input.

According to the wireless communication method of the present invention, the access point can control the transmission timing of a multicast packet to the wireless communication station based on the communication operation information to indicate whether the communication operation is set to the intermittent reception mode or not and the MC reception information to indicate whether a multicast packet is to be received or not for each wireless communication station. Therefore when all the wireless communication stations which receive the multicast packet are not set to the intermittent reception mode, for example, the multicast packet can be immediately transmitted, and quality deterioration of the multicast packet due to transmission delay jitter can be suppressed.

A wireless communication method of the present invention is a wireless communication method for a wireless communication station to perform wireless communication with an access point, according to a packet transmission system which allocates wireless bands by CSMA/CA, comprising: a transmission step of the wireless communication station transmitting, to the access point, multicast reception information to indicate whether the wireless communication station receives a multicast packet or not, and communication operation information to indicate whether communication operation for the wireless communication station to perform the wireless communication is set to an intermittent reception mode or not , and a setting cancellation step of the wireless communication station canceling the intermittent reception mode if the communication operation is set to the intermittent reception mode when setting to start reception of a multicast packet is input, and setting the communication operation to the intermittent reception mode if setting to end reception of the multicast packet is input.

According to the wireless communication method of the present invention, multicast reception information to indicate whether the multicast packet is to be received or not and communication operation information to indicate whether the communication operation is set to the intermittent reception mode or not are notified from the wireless communication station to the access point. The access point can control the transmission timing of the multicast packet to the wireless communication station using the multicast reception information and communication operation information notified from the wireless communication station. Therefore when all the wireless communication stations which receive the multicast packet are not set to the intermittent reception mode, for example, the multicast packet can be transmitted immediately, and quality deterioration of the multicast packet due to transmission delay jitter can be suppressed.

According to the present invention, quality deterioration of a multicast packet due to transmission delay jitter can be suppressed.

### BRIEF DESCRIPTION OF THE DRAWINGS

Fig. 1 is a timing chart depicting an operation of a conventional wireless communication system;
Fig. 2 is a diagram depicting a configuration of a wireless communication system according to the embodiment;
Fig. 3 is a diagram depicting a configuration of a wireless communication station according to the embodiment;
Fig. 4 is a diagram depicting a configuration of the wireless communication station according to the embodiment;
Fig. 5 is a diagram depicting a configuration of an access point according to the embodiment;
Fig. 6 is a diagram depicting a configuration of the access point according to the embodiment;
Fig. 7 is a table showing the example of a wireless communication station table according to the embodiment; and
Fig. 8 is a timing chart depicting an operation of the wireless communication system according to the embodiment.

### DESCRIPTION OF THE PREFERRED EMBODIMENTS

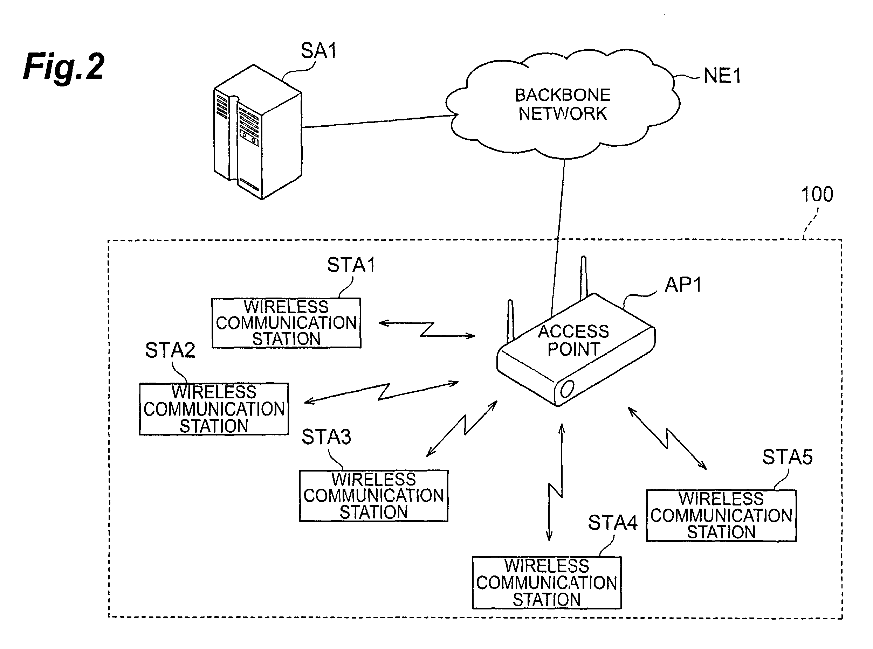

Embodiments of the present invention will now be described with reference to the drawings. In the description of the drawings, a same composing element is denoted with a same symbol, and redundant description is omitted when possible. A configuration of a wireless communication system 100 according to an embodiment will now be described with reference to Fig. 2. The wireless communication system 100 has an access point AP1 (access point) and wireless communication stations STA1, STA2, STA3, STA4 and STA5 (wireless communication stations STA1 to STA5). The access point AP1 and the wireless communication stations STA1 to STA5 transmit/receive data, such as packets, via a wireless LAN conforming to the IEEE 802.11 standard. The wireless LAN conforming to the IEEE 802.11 standard performs wireless communication based on a packet transmission system which allocates wireless bands by CSMA/CA. The access point AP1 is connected to a backbone network NE1, receives such data as packets from a content server SA1 via the backbone network NE1, and transmits the received packets to wireless communication stations STA1 to STA5. The access point AP1 transmits the packets received from the content server SA1 to the wireless communication stations STA1 to STA5 respectively at a predetermined timing according to the communication operation information (information to indicate either Active mode or PS mode) of the respective wireless communication stations STA1 to STA5, and the multicast reception information (information to indicate whether a multicast packet is to be received or not, hereafter a multicast may be called "MC").

The wireless communication stations STA1 to STA5 are stations conforming to the IEEE 802.11 standard, which can be registered (or are registered) in the access point AP1, so that packets can be received from the access point AP1. If the communication mode is set to PS mode, the wireless communication stations STA1 to STA5 intermittently receives packets which are transmitted from the access point AP1 at the transmission cycle of the DTIM beacon. When the communication operation is not set to PS mode (that is, set to Active mode), the wireless communication stations STA1 to STA5 receive the packets, which are transmitted from the access point AP1 in non-intermittent mode (normal mode), in non-intermittent mode (normal mode). There may be wireless communication stations registered in the access point AP1, other than the wireless communication stations STA1 to STA5 shown in Fig. 2.

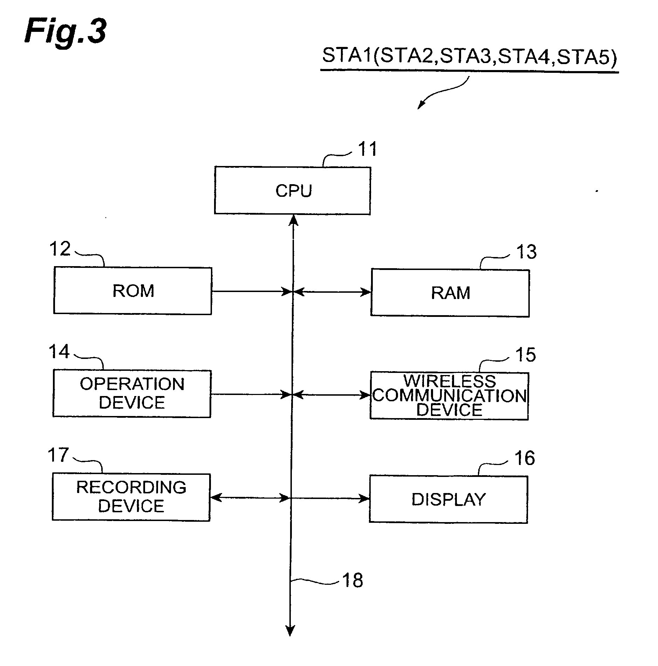

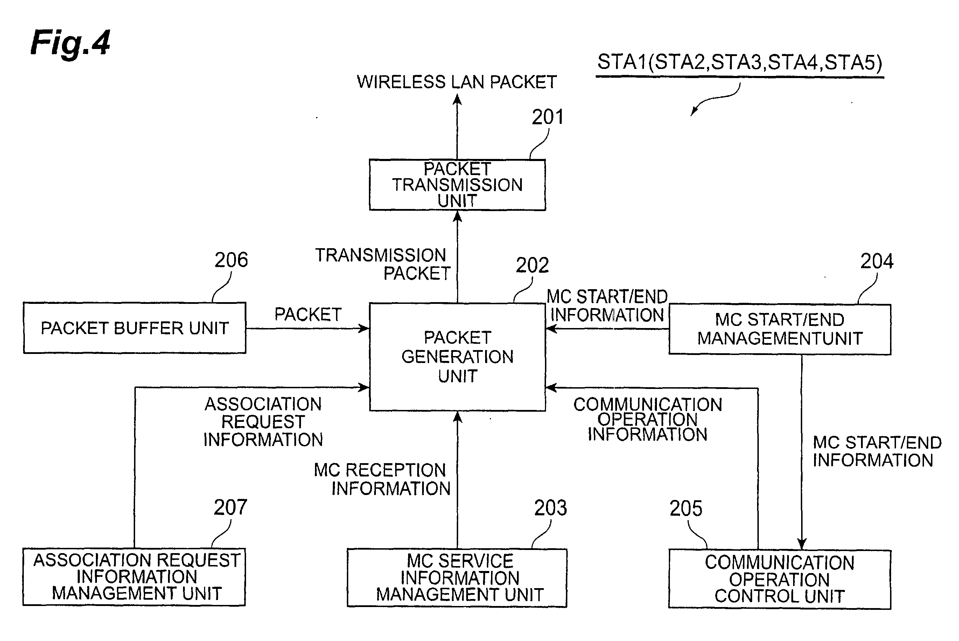

The configuration of the wireless communication station STA1 according to the embodiment will now be described with reference to Fig. 3 and Fig. 4. The configuration of the other wireless communication stations STA2, STA3, STA4 and STA5 are the same as the configuration of the wireless communication station STA1, so only the configuration of the wireless communication station STA1 will be described herein below. As Fig. 3 shows, the wireless communication station STA1 physically has a CPU 11, ROM 12, RAM 13, operation device 14, wireless communication device 15, display 16 and recording device 17, which are connected to a bus 18. The CPU 11 comprehensively controls the wireless communication station STA1 by loading predetermined computer software stored on such a internal memory as from ROM 12 (including computer programs for executing processing performed by the wireless communication station STA1) to RAM 13, and executing it. The operation device 14 is a device for inputting data, such as a keyboard, and outputs the input data to the CPU 11. The wireless communication device 15 has an interface for performing wireless communication with the access point AP1 via the wireless LAN conforming to the IEEE 802.11 standard. The display 16 is a display device such as an LCD, and displays the display data sent from the CPU 11. The recording device 17 is a memory which is freely written to/read from, and stores such data as packets received from the access point AP1, packets to be transmitted to the access pint AP1, or the like.

As Fig. 4 shows, the wireless communication station STA1 functionally has: a packet transmission unit 201 (multicast reception information transmission unit, communication operation information transmission unit), a packet generation unit 202 (multicast reception information generation unit, communication operation information generation unit), an MC service information management unit 203, MC start/end management unit 204, a communication operation control unit 205 (setting cancellation unit), a packet buffer unit 206 and an association request information management unit 207. These packet transmission unit 201 to association request information management unit 207 have functions implemented by the CPU 11 executing the above mentioned computer software stored in such a memory as ROM 12 and recording device 17, so as to operate each composing element of the wireless communication station STA1 shown in Fig. 3. The CPU 11 executes the processing which the wireless communication station STA1 performs, by executing the above mentioned computer software (in particular, by using the packet transmission unit 201 to association request information management unit 207).

The packet transmission unit 201 transmits a packet (transmission packet) which is generated by the packet generation unit 202, and includes the MC reception information (information to indicate whether a multicast packet is to be received or not) to the access point AP1 using the wireless communication device 15. The packet transmission unit 201 is generated by the packet generation unit 202, and transmits a packet (transmission packet), which is generated by the packet generation unit 202, and includes communication operation information (information to indicate whether the communication operation of the wireless LAN conforming to the IEEE 802.11 standard is set to PS mode or not), to the access point AP1 using the wireless communication device 15. The transmission packet which is transmitted from the packet generation unit 202 to the packet transmission unit 201 includes the MC reception information, communication operation information and identification information for identifying the wireless communication station STA1.

The packet generation unit 202 receives the MC reception information and communication operation information, which are transmitted from the MC service information management unit 203 and communication operation control unit 205 respectively, generates a transmission packet which includes the MC reception information and/or communication operation information, and identification information for identifying the wireless communication station STA1, and sends this transmission packet to the packet transmission unit 201. The packet generation unit 202 may generate a transmission packet (data packet and control packet) which includes the MC reception information and/or communication operation information using a packet transmitted from the packet buffer unit 206, and send this generated transmission packet to the packet transmission unit 201, or may generate a transmission packet (association request packet) which includes the MC reception information and/or communication operation information using association request information transmitted from the association request information management unit 207, and send this transmission packet to the packet transmission unit 201. When the MC start/end information transmitted from the MC start/end management unit 204 is received, the packet generation unit 202 may generate a transmission packet (request packet), which includes the MC reception information and/or communication operation information, and is used for requesting reception of a multicast packet, and send this transmission packet to the packet transmission unit 201.

The association request packet is a packet which the wireless communication station STA1 uses for requesting the access point AP1 to allow communication connection to the wireless LAN conforming to the IEEE 802.11 standard, and is sent from the wireless communication station STA1 to the access point AP1 during association. The data packet and control packet are packets which are transmitted from the wireless communication station STA1 to the access point AP1 when the wireless LAN communication conforming to the IEEE 802.11 standard is performed between the wireless communication station STA1 and access point AP1 (in the communication established state). The request packet is a packet which is transmitted from the wireless communication station STA1 to the access point AP1 when admission control, in which the wireless communication station STA1 requests the access point AP1 to receive a multicast packet, is performed. The MC reception information and communication operation information are set in the Frame-Control field of the association request packet, data packet, control packet or request packet.

The MC reception information which is set in the Frame-Control field of each packet may be 1 bit of information (e.g. '1" if a multicast packet is received, "0" if a multicast packet is not received) or may be information to indicate all or a part of the MC address of a multicast packet to be received, in addition to this 1 bit of information (or instead of this 1 bit of information).

When an instruction to indicate whether a multicast packet is to be received or not is input via the operation device 14, the MC service information management unit 203 generates MC reception information (information to receive a multicast packet) which reflects this instruction according to this instruction input. The MC service information management unit 203 stores this MC reception information in such a memory as RAM 13 and the recording device 17, and sends it to the packet generation unit 202. According to this instruction which is input via the operation device 14, the MC service information management unit 203 adds, updates or deletes the MC reception information stored in such a memory as RAM 13 and the storage device 17. Referring to the MC reception information stored in such a memory as RAM 13 and the recording device 17, the wireless communication station STA1 controls the reception of packets which are sent from the access point AP1.

When an instruction, whether a multicast packet is to be received or not, is input via the operation device 14, the MC start/end management unit 204 generates the MC start/end information to indicate the start or end of reception of the multicast packet according to this instruction input, and sends the MC start/end information to the packet generation unit 202 and communication operation control unit 205.

When an instruction on whether the communication operation of the wireless LAN conforming to the IEEE 802.11 standard is set to PS mode or Active mode is input via the operation device 14, the communication operation control unit 205 generates communication operation information reflecting this instruction according to this instruction input. The communication operation control unit 205 stores this communication operation information to such a memory as RAM 13 and the recording device 17, and sends it to the packet generation unit 202. The communication operation control unit 205 updates the communication operation information stored in such a memory as RAM 13 and the recording device 17, according to the instruction which is input to the operation device 14. The wireless communication station STA1 controls the communication operation based on the communication operation information stored in such a memory as RAM 13 and the recording device 17. When the MC start/end information is sent from the MC start/end management unit 204, the communication operation control unit 205 switches the communication operation to PS mode or Active mode according to the content of the MC start/end information. For example, if the MC start/end information to indicate the beginning of a multicast packet reception is received from the MC start/end management unit 204 when the communication operation is set to PS mode, the communication operation control unit 205 switches the communication operation from PS mode to Active mode, then if the MC start/end information to indicate the end of the multicast packet reception is received from the MC start/end management unit 204 (when the communication operation is set to Active mode), the communication operation control unit 205 switches the communication operation from Active mode to PS mode.

The packet buffer unit 206 buffers such data as packets received from the access point AP1 via the wireless communication device 15 to such a memory as RAM 13 and the recording device 17. The packet buffer unit 206 also reads the packet (e.g. data packet, control packet) stored in such a memory as ROM 12, RAM 13 or recording device 17, according to the instruction which was input from the operation device 14, and sends this read packet to the packet generation unit 202. In response to the instruction input via the operation device 14 or the like, the association request information management unit 207 reads the association request information stored in such a memory as ROM 12, RAM 13 or recording device 17, and sends this read association request information to the packet generation unit 202.

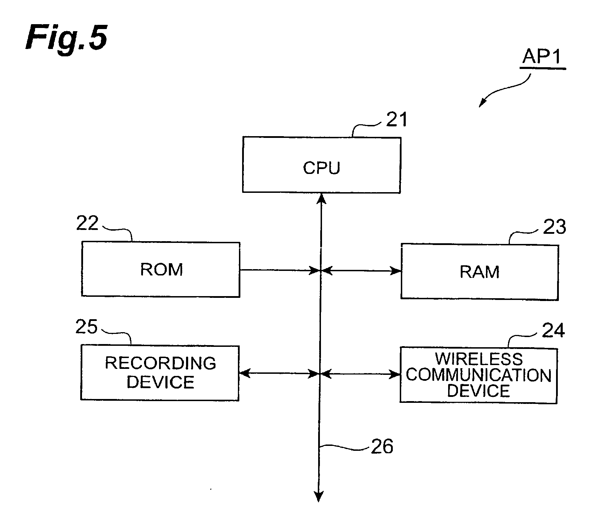

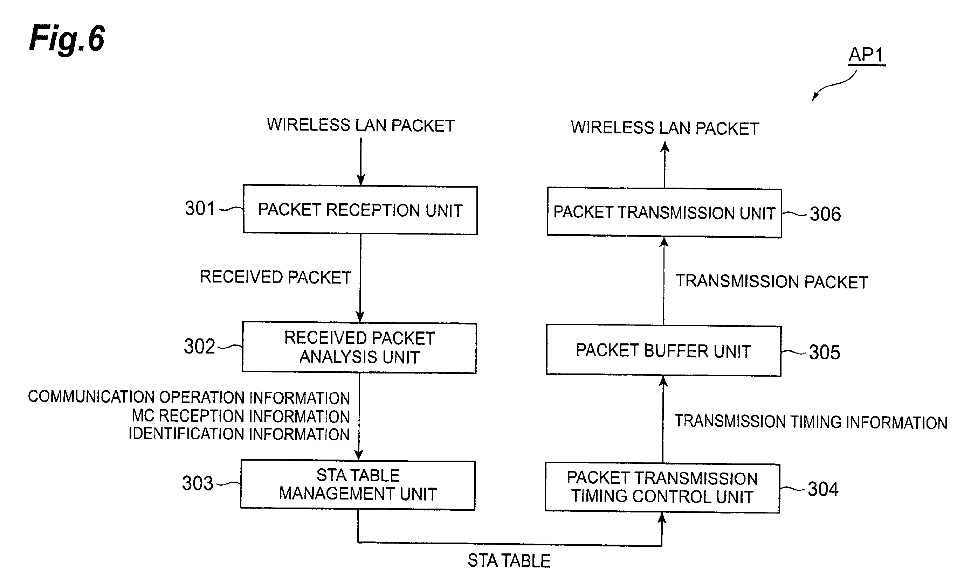

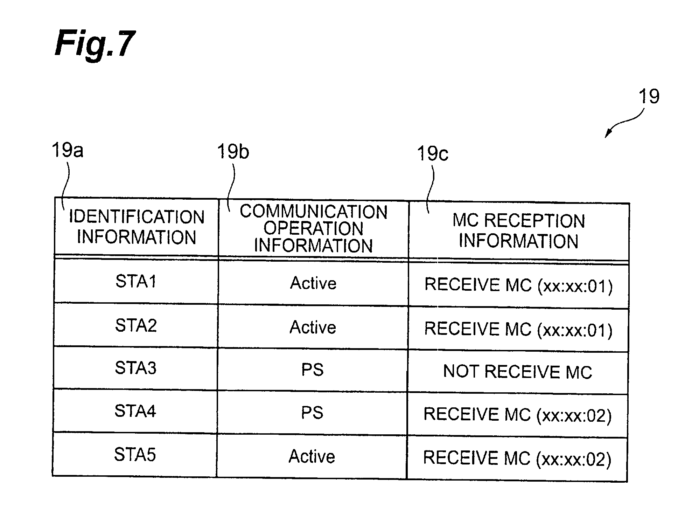

Now a configuration of the access point AP1 according to the embodiment will be described with reference to Fig. 5 and Fig. 6. As Fig. 5 shows, the access point AP1 physically has: a CPU 21, ROM 22, RAM 23, wireless communication device 24 and recording device 25, which are connected to a bus 26. The CPU 21 comprehensively controls the access point AP1 by loading a predetermined computer software stored in such an internal memory as ROM 22 (including computer programs for executing processing performed by the access point AP1) to RAM 23, and executing it. The wireless communication device 24 has an interface for performing wireless communication with the wireless communication stations STA1 to STA5 via the wireless LAN conforming to the IEEE 802.11 standard, and an interface for communicating with a content server SA1 via a backbone network NE1. The recording device 25 is a memory in which writing/reading can be freely performed, and stores such data as packets received from the content server SA1 by the wireless communication device 24 and an STA table 19 shown in Fig. 7.

As Fig. 6 shows, the access point AP1 functionally has: a packet reception unit 301 (reception unit), a received packet analysis unit 302 (extraction unit), an STA table management unit 303 (table information generation unit), a packet transmission timing control unit 304 (transmission control unit), a packet buffer unit 305 and a packet transmission unit 306. These packet reception unit 301 to packet transmission unit 306 have functions implemented by the CPU 21 executing the above mentioned computer software stored in such a memory as ROM 22 and the recording device 25, so as to operate each composing element of the access point AP1 shown in Fig. 5. The CPU 21 executes the processing performed by the access point AP1, by executing the above mentioned computer software (in particular, by using the packet reception unit 301 to packet transmission unit 306).

The packet reception unit 301 receives such data as a packet transmitted from the content server SA1 via the backbone network NE1 and a packet transmitted from a wireless communication station STA, such as wireless communication stations STA1 to STA5, using the wireless communication device 24. The reception packet analysis unit 302 analyzes each packet (received packet) which is received by the packet reception unit 301. The received packet analysis unit 302 judges whether a received packet is a packet from a wireless communication station STA, such as wireless communication stations STA1 to STA5, or a packet transmitted from the content server SA1 via the backbone network NE1. When it is decided that the received packet is a packet from a wireless communication station STA, such as wireless communication stations STA1 to STA5, the received packet analysis unit 302 extracts MC reception information, communication operation information and identification information from this received packet, and sends this extracted MC reception information, communication operation information and identification information, to the STA table management unit 303. If it is decided that the received packet is a packet transmitted from the content server SA1 via the backbone network NE1, the received packet analysis unit 302 judges whether this received packet is a multicast packet. If it is decided that the received packet is a multicast packet, the received packet analysis unit 302 extracts the MC address of this multicast packet from the received packet.

When the MC reception information, communication operation information and identification information are received from the received packet analysis unit 302, the STA table management unit 303 updates the content of the STA table 19 (see the example of the STA table 19 in Fig. 7) using the MC reception information, communication operation information and identification information. The STA table 19 is stored in such an internal memory as RAM 23 and the recording device 25.

If the received packet analysis unit 302 decides that the received packet is a multicast packet, the packet transmission timing control unit 304 generates transmission timing information (information for controlling the transmission timing of a received packet) to indicate a transmission timing of the received packet (that is, either transmission timing to be transmitted immediately or transmission timing to buffer a received packet in such an internal memory as RAM 23 and the recording device 25, and transmit this buffered packet at a transmission cycle of the DTIM beacon) based on the content (content of the identification information 19a, communication operation information 19b and MC reception information 19c shown in Fig. 7) of the STA table 19 (or based on the MC address of the multicast packet and the content of the STA table 19), and sends this transmission timing information to the packet buffer unit 305.

Specifically if it is decided that at least one identification information on a wireless communication station STA, which is set to receive the receive packet and is set to PS mode, is set in the STA table 19, the packet transmission timing control unit 304 buffers the multicast packet received by the access point AP1 in the internal memory of the access point AP1, and sends the DTIM beacon including data to indicate that the received packet is buffered, so as to generate transmission timing information to indicate that this buffered multicast packet is transmitted at the transmission cycle of the DTIM beacon. When it is decided that the identification information of the wireless communication station STA which is set to receive this receive packet and is set to PS mode, is not set in the STA table 19, the packet transmission timing control unit 304 generates transmission timing information to indicate that this receive packet is transmitted without transmitting the DTIM beacon.

In concrete terms, when the received packet is a multicast packet, the packet transmission timing control unit 304 specifies the identification information of the wireless communication station STA, in which notification to receive the multicast packet (and/or the MC address of this multicast packet) is set in the MC reception information 19c and in which PS mode is set in the communication operation information 19b, from the identification information 19a. If this identification information can be specified from the identification information 19a, the packet transmission timing control unit 304 buffers the received packet (multicast packet), and generates transmission timing information to transmit this buffered received packet at the transmission cycle of the DTIM beacon, and sends this generated transmission timing information to the packet buffer unit 305. If the received packet is a multicast packet, and if the identification information of the wireless communication station STA, in which notification to receive the multicast packet (and/or the MC address of this multicast packet) is set in the MC reception information 19c and PS mode is set in the communication operation information 19b, cannot be specified from the identification information 19a, the packet transmission timing control unit 304 generates transmission timing information to transmit the received packet (multicast packet) immediately without buffering it, and sends this generated transmission timing information to the packet buffer unit 305.

The packet buffer unit 305 performs transmission processing of the received packet (multicast packet) based on the transmission timing information transmitted from the packet transmission timing control unit 304. In concrete terms, when transmission timing information, to notify that a received packet (multicast packet) is buffered and this buffered packet is transmitted at the transmission cycle of the DTIM beacon, is received from the packet transmission timing control unit 304, the packet buffer unit 305 buffers the received packet (multicast packet) in such an internal memory as RAM 23 and the recording device 25. In this case, the packet buffer unit 305 generates a DTIM beacon, in which data to notify that the received packet (multicast packet) is buffered, is set, transmits this generated DTIM beacon to the packet transmission unit 306 as a transmission packet, and after sending this DTIM beacon, sends the buffered received packet (multicast packet) to the packet transmission unit 306 as a transmission packet. When transmission timing information to notify that a received packet (multicast packet) is transmitted immediately without being buffered is received from the packet transmission timing control unit 304, on the other hand, the packet buffer unit 305 transmits the received packet (multicast packet) to the packet transmission unit 306 as a transmission packet, without buffering it. The packet transmission unit 306 transmits the transmission packet transmitted from the packet buffer unit 305 using the wireless communication device 24.

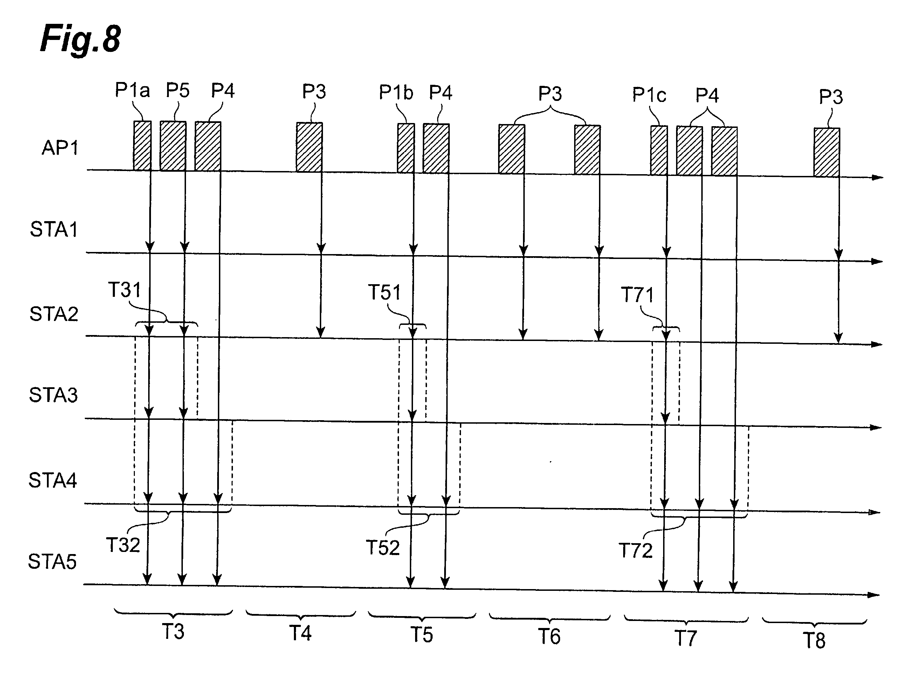

Now operation of the wireless communication system 100 according to the embodiment will be described with reference to Fig. 7 and Fig. 8. Fig. 7 shows an example of an STA table, and Fig. 8 shows a timing chart for depicting the operation of the wireless communication system 100. First the STA table 19 shown in Fig. 7 will be described. The STA table 19 includes the identification information 19a, communication operation information 19b and MC reception information 19c. In the identification information 19a of the STA table 19 shown in Fig. 7, the wireless communication terminals STA1 to STA5 are registered. In the communication operation information 19b corresponding to the wireless communication terminal STA1, Active mode is set, and in the MC reception information 19c corresponding to the wireless communication station STA1, information that the multi-packet is received and the MC address (xx:xx:01) of the multicast packet to be received are set. In the communication operation information 19b corresponding to the wireless communication station STA2, Active mode is set, and in the MC reception information 19c corresponding to the wireless communication station STA2, information that the multicast packet is received and the MC address (xx:xx:01) of the multicast packet to be received are set.

In the communication operation information 19b corresponding to the wireless communication station STA3, PS mode is set, and in the MC reception information 19c corresponding to the wireless communication station STA3, information that the multicast packet is not received is set. In the communication operation information 19b corresponding to the wireless communication station STA4, PS mode is set, and in the MC reception information 19c corresponding to the wireless communication station STA4, information that the multicast packet is received and the MC address (xx:xx:02) of the multicast packet to be received are set. In the communication operation information 19b corresponding to the wireless communication station STA5, Active mode is set, and in the MC reception information 19c corresponding to the wireless communication station STA5, information that the multicast packet is received and the MC address (xx:xx:02) of the multicast packet to be received are set.

Now the operation of the wireless communication system 100 will be described with reference to the timing chart shown in Fig. 8. The timing chart in Fig. 8 shows an example of the operation of the wireless communication system 100 using the STA table 19 in Fig. 7. It is assumed that the STA table 19 shown in Fig. 7 is stored in such an internal memory as RAM 23 and the recording device 25 of the access point AP1. First the operation of the wireless communication system 100 in the period T3 will be described. The access point AP1 at first receives a broadcast packet P5 and a multicast packet P4 at the MC address (xx:xx:02) from the content server SA1 via the backbone network NE1. The access point AP1, which received the broadcast packet P5, refers to the STA table 19, and specifies the wireless communication stations STA which are registered in the STA table 19 and are set to PS mode. Since the access point AP1 specifies the wireless communication stations STA3 and STA4 as the wireless communication stations STA which are set to PS mode, the broadcast packet P5 is buffered in such an internal memory as RAM 23 and the recording device 25 of the access point AP1 by the access point AP1. The access point AP1 also received the multicast packet P4, so the access point AP1 refers to the STA table 19 and specifies the wireless communication stations STA which are set to receive the multicast packet P4, and judges whether any of these specified wireless communication stations STA are set to PS mode. The access point AP1 specifies the wireless communication stations STA4 and STA5 as the wireless stations STA which are set to receive the multicast packet P4, and then out of these specified wireless communication stations STA4 and STA5, the access point AP1 decides that the wireless communication station STA4 is set to PS mode, therefore the multicast packet P4 is buffered in such an internal memory as RAM 23 and the recording device 25 of the access point AP1 by the access point AP1. The access point AP 1 generates a DTIM beacon P1a in which a data to notify that the broadcast packet P5 and the multicast packet P4 are buffered is set, and transmits this DTIM beacon P1a to the wireless communication stations STA1 to STA5.

The wireless communication stations STA1, STA2 and STA5, which are set to Active mode, are always in Awake state, but the wireless communication stations STA3 and STA4, which are set to PS mode, enter the Awake state before the DTIM beacon P1a is transmitted. The wireless communication stations STA1 to STA5 in the Awake state receive the DTIM beacon P1a and broadcast packet P5 from the access point AP1. The wireless communication stations STA1 and STA2, which are set to Active mode, maintain the Awake state even after the reception of the DTIM beacon P1a and broadcast packet P5 completes. The wireless communication stations STA1 and STA2, which are not set to receive the multicast packet P4, do not receive the multicast packet P4. The wireless communication station STA3, which is set to PS mode but is not set to receive the multicast packet P4, is in the Awake state only during the period T31 until the reception of the DTIM beacon P1a and broadcast packet P5 completes, and transits to the Doze state when the reception of the DTIM beacon P1a and broadcast packet P5 completes. The wireless communication station STA4, which is set to PS mode and is set to receive the multicast packet P4, is in the Awake state only during the period T32 until the reception of the DTIM beacon P1a, broadcast packet P5 and multicast packet P4 completes, and transits to the Doze state when the reception of the DTIM beacon P1a, broadcast packet P5 and multicast packet P4 completes. The wireless communication station STA5, which is set to receive the multicast packet P4, receives the DTIM beacon P1a, broadcast packet P5 and multicast packet P4. The wireless communication station STA5, which is set to Active mode, maintains the Awake state even after the reception of the DTIM beacon P1a, the broadcast packet P5 and multicast packet P4 completes.

Now the operation of the wireless communication system 100 in the period T4 after the period T3 will be described. The access point AP1 receives a multicast packet P3 at the MC address (xx:xx:01) from the content server SA 1 via the backbone network NE1. The access point AP1, which received the multicast packet P3, refers to the STA table 19, and specifies the wireless communication stations STA which are set to receive the multicast packet P3, and judges whether any of these specified wireless communication stations STA are set to PS mode. The access point AP1 specifies the wireless communication stations STA1 and STA2 as the wireless communication stations STA which are set to receive the multicast packet P3, and the access point AP1 decides that the specified wireless communication stations STA1 and STA2 are not set to PS mode (that is, set to Active mode), therefore the multicast packet P3 is not buffered, but is transmitted immediately by the access point AP1.

The wireless communication stations STA1 and STA2, which are set to Active mode, receive the multicast packet P3 without switching the communication operation. The wireless communication stations STA3 and STA4, which are set to PS mode but are not set to receive the multicast packet P3, do not transit from the Doze state to the Awake state to receive the multicast packet P3. The wireless communication station STA5, which is set to Active mode but is not set to receive the multicast packet P3, does not receive the multicast packet P3 even if it is in the Awake state.

Now the operation of the wireless communication system 100 in the period T5 after the period T4 will be described. The access point AP1 receives a multicast packet P4 at the MC address (xx:xx:02) from the content server SA1 via the backbone network NE1. The access point AP1, which receives the multicast packet P4, refers to STA table 19, and specifies the wireless communication stations STA which are set to receive the multicast packet P4, and judges whether any of these specified wireless communication stations STA are set to PS mode. The access point AP1 specifies the wireless communication stations STA4 and STA5 as wireless communication stations STA which are set to receive the multicast packet P4, and the access point AP1 decides that the wireless communication station STA4, out of the specified wireless communication stations STA4 and STA5, is set to PS mode, therefore the multicast packet P4 is buffered in such an internal memory as RAM 23 and the recording device 25 of the access point AP1 by the access point AP1. The access point AP1 generates a DTIM beacon P1b in which data, to notify that the multicast packet P4 is buffered, is set, and transmits this DTIM beacon P1b to the wireless communication stations STA1 to STA5.

The wireless communication stations STA1, STA2 and STA5, which are set to Active mode, are always in the Awake state, but the wireless communication stations STA3 and STA4, which are set to PS mode, enter the Awake state before the DTIM beacon P1b is transmitted. The wireless communication stations STA1 to STA5 in the Awake state receive the DTIM beacon P1b from the access point AP1. The wireless communication stations STA1 and STA2, which are set to Active mode, maintain the Awake state even after the reception of the DTIM beacon P1b completes. The wireless communication stations STA1 and STA2, which are not set to receive the multicast packet P4, do not receive the multicast packet P4. The wireless communication station STA3, which is set to PS mode but is not set to receive the multicast packet P4, is in the Awake state only during the period T51 until the reception of the DTIM beacon P1b completes, and transits to the Doze state when the reception of the DTIM beacon P1b completes. The wireless communication station STA4, which is set to PS mode and is set to receive the multicast packet P4, is in the Awake state only during the period T52 until the reception of the DTIM beacon P1b and multicast packet P4 completes, and transits to the Doze state when the reception of the DTIM beacon P1b and multicast packet P4 completes. The wireless communication station STA5, which is set to receive the multicast packet P4, receives the DTIM beacon P1b and multicast packet P4. The wireless communication station STA5, which is set to Active mode, maintains the Awake state even after the reception of the DTIM beacon P1b and multicast packet P4 completes.

The operation of the wireless communication system 100 in the period T6 after the period T5 is the same as the operation of the wireless communication system 100 in the period T4, and the operation of the wireless communication system 100 in the period T7 after the period T6 is the same as the operation of the wireless communication system 100 in the period T5 (the DTIM beacon P1c corresponds to the DTIM beacon P1b, the period T71 corresponds to the period T51, and the period T72 corresponds to the period T52), and the operation of the wireless communication system 100 in the period T8 after the period T7 is the same as the operation of the wireless communication system 100 in the period T4.

Now the functions and effects of the wireless communication system 100 according to the present embodiment will be described. The wireless communication system 100 is a wireless communication system comprising an access point AP1 for performing wireless communication (wireless LAN communication conforming to the IEEE 802.11 standard) according to a packet transmission system which allocates wireless bands by CSMA/CA, and one or more wireless communication stations STA, such as wireless communication stations STA1 to STA5. Each of the wireless communication stations STA1 to STA5 has a packet transmission unit 201 and a packet generation unit 202. The packet generation unit 202 generates a packet which includes the MC reception information to indicate whether a multicast packet is received. The packet transmission unit 201 transmits a packet which includes the MC reception information generated by the packet generation unit 202. The packet generation unit 202 generates a packet which includes communication operation information to indicate whether communication operation for performing the wireless communication is set to PS mode. The packet transmission unit 201 transmits a packet which includes communication operation information generated by the packet generation unit 202 to the access point AP1. The access point AP1 has a packet reception unit 301, a received packet analysis unit 302, a STA table management unit 303, and a packet transmission timing control unit 304. The packet reception unit 301 receives a packet transmitted from the wireless communication station STA, such as wireless communication stations STA1 to STA5. From the packet received by the packet reception unit 301, the received packet analysis unit 302 extracts identification information for identifying the wireless communication station STA which has transmitted this packet, the MC reception information and the communication operation information. The STA table management unit 303 generates an STA table 19 associating the identification information, the MC reception information and the communication operation information extracted by the received packet analysis unit 302, and stores this STA table 19 in such an internal memory as RAM 23 and the recording device 25 of the access point AP1. The packet transmission timing control unit 304 controls the transmission timing of a multicast packet to the wireless communication station STA, such as the wireless communication stations STA1 to STA5, based on the identification information, MC reception information and communication operation information extracted by the received packet analysis unit 302 (first aspect). It is preferable that the access point AP1 further has: an STA table management unit 303 for generating an STA table 19 associating the identification information, MC reception information and communication operation information extracted by the received packet analysis unit 302, and storing this STA table 19 in such an internal memory as RAM 23 and the recording device 25 of the access point AP1, and the packet transmission timing control unit 304 controls the transmission timing of a multicast packet to the wireless communication station STA, such as the wireless communication stations STA1 to STA5, based on the STA table 19 stored in the internal memory by the STA table management unit 303.

In the wireless communication system 100 according to the first aspect, the access point AP1 can control the transmission timing of a multicast packet to the wireless communication station STA using the STA table 19 which indicates whether the communication operation is set to PS mode or not, and whether a multicast packet is to be received or not for each wireless communication station STA. Therefore when all the wireless communication stations STA which receive the multicast packet are not set to PS mode (all the wireless communication stations STA are set to Active mode), the multicast packet can be transmitted immediately, and quality deterioration of the multicast packet due to transmission delay jitter can be suppressed.

In the wireless communication system 100 according to the first aspect, the MC reception information may be 1 bit of information to indicate whether a multicast packet is to be received or not (second aspect). In this case, whether the multicast packet can be received or not can be notified to the access point AP1 merely by adding 1 bit or MC reception information to the conventional packet configuration.

In the wireless communication system 100 according to the first aspect, the MC reception information may indicate a part or all of the multicast address of a reception target multicast packet (third aspect). In this case, a part or all of the multicast address is used for the MC reception information, so the transmission timing of the multicast packet can be set according to the multicast address.

In the wireless communication system 100 according to any one of the first to third aspects, the packet generation unit 202 may generate an association request packet which includes the MC reception information (fourth aspect). In this case, the wireless communication station STA can notify the MC reception information to the access point AP1 in association with the access point AP1. Hence a packet need not be sent merely for notifying the MC reception information, which makes use of wireless media efficient.

In the wireless communication system 100 according to any one of the first to third aspects, the packet generation unit 202 may generate a data packet or control packet which includes the MC reception information (fifth aspect). In this case, if the MC reception information is set in a data packet or control packet to be transmitted during communication with the access point AP1, the wireless communication station STA can notify the MC reception information during communication with the access point AP1. Hence a packet need not be sent merely for notifying the MC reception information, which makes use of wireless media efficient.

In the wireless communication system 100 according to any one of the first to third aspects, the packet generation unit 202 may generate a request packet including the MC reception information and requesting reception of a multicast packet (sixth aspect). In this case, the MC reception information can be notified to the access point AP1 when the multicast packet reception is requested. Hence a packet need not be sent merely for notifying the MC reception information, which makes use of wireless media efficient.

In the wireless communication system 100 according to any one of the first to sixth aspects, the wireless communication station STA, such as the wireless communication stations STA1 to STA5, may further comprise a communication operation control unit 205. The communication operation control unit 205 cancels the PS mode if the communication operation is set to PS mode when setting to start reception of a multicast packet is input, and sets the communication operation to PS mode if setting to end reception of the multicast packet is input after PS mode is cancelled (seventh aspect). Even if the communication operation is set to PS mode, the PS mode is cancelled when a multicast packet is received, therefore the access point AP1 need not buffer the multicast packet. Hence quality deterioration of the multicast packet due to transmission delay jitter can be suppressed while implementing power saving by PS mode.

In the wireless communication system 100 according to any one of the first to sixth aspects, it is preferable that when a multicast packet transmitted from the content server SA1 via the backbone network NE1 is received by the packet reception unit 301 of the access point AP1, if it is judged that identification information of at least one wireless communication station STA which is set to receive a multicast packet received by the packet reception unit 301 and is set to PS mode, is set in the STA table 19, the packet transmission timing control unit 304 of the access point AP1 buffers the multicast packet received by the access point AP1 in an internal memory of the access point AP1, and transmits a DTIM beacon which includes data to notify that a multicast packet received by the packet reception unit 301 is buffered, so as to generate transmission timing information to transmit this buffered multicast packet at a transmission cycle of the DTIM beacon, or it is also preferred that if it is judged that identification information of a wireless communication station STA which is set to receive a multicast packet received by the packet reception unit 301 and is set to PS mode, is not set in the STA table 19, then the packet transmission timing control unit 304 generates transmission timing information to notify that the multicast packet received by the packet reception unit 301 is sent without using a DTIM beacon (eighth aspect).

In the wireless communication system 100 according to the eighth aspect, if all the wireless communication stations STA are not set to PS mode, a multicast packet is transmitted without buffering, so quality deterioration of the multicast packet due to transmission delay jitter can be avoided. If there is at least one wireless communication station STA being set to PS mode, buffering is performed to support the PS mode, so the multicast packet can be received with certainty. This processing is executed for each multicast packet received by the access point AP1.

## Claims

1. A wireless communication system (100) comprising an access point (AP1) for performing wireless communication according to a packet transmission system which allocates wireless bands by CSMA/CA, and one or more wireless communication stations (STA1, STA2, STA3, STA4, STA5),
wherein the wireless communication station comprises:
multicast reception information generation unit (202) for generating a packet which includes multicast reception information to indicate whether a multicast packet is to be received or not;
multicast reception information transmission unit (201) for transmitting a packet, which is generated by the multicast reception information generation unit, and includes the multicast reception information, to the access point;
communication operation information generation unit (202) for generating a packet which includes communication operation information to indicate whether communication operation for the wireless communication is set to an intermittent reception mode or not; and
communication operation information transmission unit (201) for transmitting a packet, which is generated by the communication operation information generation unit and includes the communication operation information, to the access point, and
the access point comprises:
reception unit (301) for receiving a packet transmitted from the wireless communication station;
extraction unit (302) for extracting identification information for identifying the wireless communication station which has transmitted the packet, the multicast reception information and the communication operation information from the packet received by the reception unit; and
transmission control unit (304) for controlling a transmission timing of a multicast packet to the wireless communication station based on the identification information, the multicast reception information and the communication operation information, which are extracted by the extraction unit; and
**characterized in that** the wireless communication station further comprises a setting cancellation unit (205) for canceling the intermittent reception mode if the communication operation is set to the intermittent reception mode when setting to start reception of a multicast packet is input, and for setting the communication operation to the intermittent reception mode if setting to end reception of the multicast packet is input.

2. The wireless communication system according to Claim 1, further comprising table information generation unit (303) for generating table information associating the identification information, the multicast reception information and the communication operation information which are extracted by the extraction unit, and storing the table information in a memory, wherein
the transmission control unit controls the transmission timing based on the table information stored in the memory by the table information generation unit.

3. The wireless communication system according to Claim 1 or Claim 2, wherein the multicast reception information is 1 bit of information to indicate whether a multicast packet is to be received or not.

4. The wireless communication system according to Claim 1 or Claim 2, wherein the multicast reception information indicates a part or all of a multicast address of a reception target multicast packet.

5. The wireless communication system according to any one of Claim 1 to Claim 4, wherein the multicast reception information generation unit generates an association request packet which includes the multicast reception information.

6. The wireless communication system according to any one of Claim 1 to Claim 4, wherein the multicast reception information generation unit generates a data packet or control packet which includes the multicast reception information.

7. The wireless communication system according to any one of Claim 1 to Claim 4, wherein the multicast reception information generation unit generates a request packet including the multicast reception information and requesting reception of a multicast packet.

8. The wireless communication system according to any one of Claim 1 to Claim 7, wherein when a multicast packet transmitted from an external communication network is received by the reception unit of the access point,
if there is at least one wireless communication station which is set to receive a multicast packet received by the reception unit and set to the intermittent reception mode, the transmission control unit of the access point buffers the multicast packet received by the reception unit in a memory of the access point, and controls the transmission timing so as to transmit the buffered multicast packet at a transmission cycle of a DTIM beacon, and
if there is no wireless communication station which is set to receive a multicast packet received by the reception unit and set to the intermittent reception mode, the transmission control unit of the access point controls the transmission timing so as to transmit the multicast packet received by the reception unit without using the DTIM beacon.

9. A wireless communication station (STA1, STA2, STA3, STA4, STA5) which performs wireless communication with an access point (AP1), according to a packet transmission system which allocates wireless bands by CSMA/CA, comprising:
multicast reception information generation unit (202) for generating a packet which includes multicast reception information to indicate whether a multicast packet is to be received or not;
multicast reception information transmission unit (201) for transmitting a packet, which is generated by the multicast reception information generation unit, and includes the multicast reception information, to the access point;
communication operation information generation unit (202) for generating a packet which includes communication operation information to indicate whether communication operation for the wireless communication is set to an intermittent reception mode or not; and
communication operation information transmission unit (201) for transmitting a packet, which is generated by the communication operation information generation unit, and includes the communication operation information, to the access point; and
**characterized in that** the wireless communication station further comprises a setting cancellation unit (205) for canceling the intermittent reception mode if the communication operation is set to the intermittent reception mode when setting to start reception of a multicast packet is input, and for setting the communication operation to the intermittent reception mode if setting to end reception of the multicast packet is input.

10. A wireless communication method for an access point and one or more wireless communication stations to perform wireless communication according to a packet transmission system which allocates wireless bands by CSMA/CA, comprising:
a transmission step of the wireless communication station transmitting, to the access point, multicast reception information to indicate whether the wireless communication station receives a multicast packet or not, and communication operation information to indicate whether communication operation for the wireless communication station to perform the wireless communication, is set to an intermittent reception mode or not;
an extraction step of the access point extracting identification information for identifying the wireless communication station which has transmitted the packet, the multicast reception information and the communication operation information, from the packet transmitted from the wireless communication station to the access point in the transmission step; and
a transmission control step of the access point controlling a transmission timing of a multicast packet to the wireless communication station based on the identification information, the multicast reception information and the communication operation information, which are extracted in the extraction step; and
**characterized by** a setting cancellation step of the wireless communication station canceling the intermittent reception mode if the communication operation is set to the intermittent reception mode when setting to start reception of a multicast packet is input, and setting the communication operation to the intermittent reception mode if setting to end reception of the multicast packet is input.

11. A wireless communication method for a wireless communication station to perform wireless communication with an access point, according to a packet transmission system which allocates wireless bands by CSMA/CA, comprising:
a transmission step of the wireless communication station transmitting, to the access point, multicast reception information to indicate whether the wireless communication station receives a multicast packet or not, and communication operation information to indicate whether communication operation for the wireless communication station to perform the wireless communication is set to an intermittent reception mode or not; and
**characterized by** a setting cancellation step of the wireless communication station canceling the intermittent reception mode if the communication operation is set to the intermittent reception mode when setting to start reception of a multicast packet is input, and setting the communication operation to the intermittent reception mode if setting to end reception of the multicast packet is input.

## Patentansprüche

1. Ein Drahtlos-Kommunikationssystem (100), aufweisend einen Zugangspunkt (AP1) zum Durchführen einer Drahtlos-Kommunikation gemäß einem Paketübermittlungssystem, das Drahtlos-Bänder durch CSMA/CA zuweist, und eine oder mehr Drahtlos-Kommunikationsstationen (STA1, STA2, STA3, STA4, STA5),
wobei die Drahtlos-Kommunikationsstation aufweist:
eine Sammelsende-Empfangsinformations-Erzeugungseinheit (202) zum Erzeugen eines Paketes, das Sammelsende-Empfangsinformationen enthält, um anzuzeigen, ob ein Sammelsendepaket zu empfangen ist oder nicht,
eine Sammelsende-Empfangsinformations-Übermittlungseinheit (201) zum Übermitteln eines Paketes, das von der Sammelsende-Empfangsinformations-Erzeugungseinheit erzeugt wird und die Sammelsende-Empfangsinformationen enthält, an den Zugangspunkt,
eine Kommunikationsfunktions-Informationserzeugungseinheit (202) zum Erzeugen eines Paketes, das Kommunikationsfunktions-Informationen enthält, um anzuzeigen, ob eine Kommunikationsfunktion für die Drahtlos-Kommunikation auf einen intermittierenden Empfangsmodus eingestellt ist oder nicht, und
eine Kommunikationsfunktions-Informationsübermittlungseinheit (201) zum Übermitteln eines Paketes, das von der Kommunikationsfunktions-Informationserzeugungseinheit erzeugt wird und die Kommunikationsfunktions-Informationen enthält, an den Zugangspunkt, und
wobei der Zugangspunkt aufweist:
eine Empfangseinheit (301) zum Empfangen eines von der Drahtlos-Kommunikationsstation übermittelten Paketes,
eine Extraktionseinheit (302) zum Extrahieren von Identifikationsinformationen zum Identifizieren der Drahtlos-Kommunikationsstation, die das Paket übermittelt hat, der Sammelsende-Empfangsinformationen und der Kommunikationsfunktions-Informationen aus dem von der Empfangseinheit empfangenen Paket, und
eine Übermittlungs-Steuereinheit (304) zum Steuern eines Übermittlungstaktes eines Sammelsendepaketes an die Drahtlos-Kommunikationsstation basierend auf den Identifikationsinformationen, den Sammelsende-Empfangsinformationen und den Kommunikationsfunktions-Informationen, die von der Extraktionseinheit extrahiert werden, und
**dadurch gekennzeichnet, dass** die Drahtlos-Kommunikationsstation ferner eine Einstellungs-Aufhebungseinheit (205) aufweist, zum Aufheben eines intermittierenden Empfangsmodus, wenn die Kommunikationsfunktion auf den intermittierenden Empfangsmodus eingestellt ist, wenn eine Einstellung zum Starten des Empfangens eines Sammelsendepaketes eingegeben wird, und zum Einstellen der Kommunikationsfunktion auf den intermittierenden Empfangsmodus, wenn eine Einstellung zum Beenden des Empfangens des Sammelsendepaketes eingegeben wird.

2. Das Drahtlos-Kommunikationssystem gemäß Anspruch 1, ferner aufweisend eine Tabelleninformations-Erzeugungseinheit (303) zum Erzeugen von Tabelleninformationen, die die Identifikationsinformationen, die Sammelsende-Empfangsinformationen und die Kommunikationsfunktions-Informationen verknüpfen, die durch die Extraktionseinheit extrahiert werden, und zum Speichern der Tabelleninformationen in einem Speicher, wobei
die Übermittlungs-Steuereinheit den Übermittlungstakt basierend auf den Tabelleninformationen steuert, die von der Tabelleninformations-Erzeugungseinheit in der Informationserzeugungseinheit gespeichert werden.

3. Das Drahtlos-Kommunikationssystem gemäß Anspruch 1 oder Anspruch 2, wobei die Sammelsende-Empfangsinformationen 1 Bit an Information sind, um anzuzeigen, ob ein Sammelsendepaket zu empfangen ist oder nicht.

4. Das Drahtlos-Kommunikationssystem gemäß Anspruch 1 oder Anspruch 2, wobei die Sammelsende-Empfangsinformationen einen Teil oder alles einer Sammelsendeadresse eines Empfangsziel-Sammelsendepaketes anzeigen.

5. Das Drahtlos-Kommunikationssystem gemäß irgendeinem von Anspruch 1 bis Anspruch 4, wobei die Sammelsende-Empfangsinformations-Erzeugungseinheit ein Verknüpfungsanfrage-Paket erzeugt, das die Sammelsende-Empfangsinformationen enthält.

6. Das Drahtlos-Kommunikationssystem gemäß irgendeinem von Anspruch 1 bis Anspruch 4, wobei die Sammelsende-Empfangsinformations-Erzeugungseinheit ein Datenpaket oder Steuerpaket erzeugt, das die Sammelsende-Empfangsinformationen enthält.

7. Das Drahtlos-Kommunikationssystem gemäß irgendeinem von Anspruch 1 bis Anspruch 4, wobei die Sammelsende-Empfangsinformations-Erzeugungseinheit ein Anfragepaket erzeugt, das die Sammelsende-Empfangsinformationen enthält und den Empfang eines Sammelsendepaketes anfordert.

8. Das Drahtlos-Kommunikationssystem gemäß irgendeinem von Anspruch 1 bis Anspruch 7, wobei, wenn ein von einem externen Kommunikationsnetzwerk übermitteltes Sammelsendepaket von der Empfangseinheit des Zugangspunktes empfangen wird,
die Übermittlungs-Steuereinheit des Zugangspunktes das von der Empfangseinheit empfangene Sammelsendepaket in einem Speicher des Zugangspunktes zwischenspeichert und den Übermittlungstakt steuert, um das zwischengespeicherte Sammelsendepaket in einem Übermittlungszyklus eines DTIM-Beacons zu übermitteln, wenn mindestens eine Drahtlos-Kommunikationsstation vorhanden ist, die eingestellt ist, um ein von der Empfangseinheit empfangenes Sammelsendepaket zu empfangen, und auf den intermittierenden Empfangsmodus eingestellt ist, und
die Übermittlungs-Steuereinheit des Zugangspunktes den Übermittlungstakt steuert, um das von der Empfangseinheit empfangene Sammelsendepaket ohne Verwendung des DTIM-Beacons zu übermitteln, wenn keine Drahtlos-Kommunikationsstation vorhanden ist, die eingestellt ist, um ein von der Empfangseinheit empfangenes Sammelsendepaket zu empfangen, und auf den intermittierenden Empfangsmodus eingestellt ist.

9. Eine Drahtlos-Kommunikationsstation (STA1, STA2, STA3, STA4, STA5), die mit einem Zugangspunkt (AP1) gemäß einem Paketübermittlungssystem, das Drahtlos-Bänder durch CSMA/CA zuweist, eine Drahtlos-Kommunikation durchführt, aufweisend:
eine Sammelsende-Empfangsinformations-Erzeugungseinheit (202) zum Erzeugen eines Paketes, das Sammelsende-Empfangsinformationen enthält, um anzuzeigen, ob ein Sammelsendepaket zu empfangen ist oder nicht,
eine Sammelsende-Empfangsinformations-Übermittlungseinheit (201) zum Übermitteln eines Paketes, das von der Sammelsende-Empfangsinformations-Erzeugungseinheit erzeugt wird und die Sammelsende-Empfangsinformationen aufweist, an den Zugangspunkt,
eine Kommunikationsfunktions-Informationserzeugungseinheit (202) zum Erzeugen eines Paketes, das Kommunikationsfunktions-Informationen enthält, um anzuzeigen, ob eine Kommunikationsfunktion für die Drahtlos-Kommunikation auf einen intermittierenden Empfangsmodus eingestellt ist oder nicht, und
eine Kommunikationsfunktions-Informationsübermittlungseinheit (201) zum Übermitteln eines Paketes, das von der Kommunikationsfunktions-Informationserzeugungseinheit erzeugt wird und die Kommunikationsfunktions-Informationen enthält, an den Zugangspunkt, und
**dadurch gekennzeichnet, dass** die Drahtlos-Kommunikationsstation ferner eine Einstellungs-Aufhebungseinheit (205) aufweist, zum Aufheben des intermittierenden Empfangsmodus, wenn die Kommunikationsfunktion auf den intermittierenden Empfangsmodus eingestellt ist, wenn eine Einstellung zum Starten des Empfangens eines Sammelsendepaketes eingegeben wird, und zum Einstellen der Kommunikationsfunktion auf den intermittierenden Empfangsmodus, wenn eine Einstellung zum Beenden des Empfangens des Sammelsendepaketes eingegeben wird.

10. Ein Drahtlos-Kommunikationsverfahren für einen Zugangspunkt und eine oder mehr Drahtlos-Kommunikationsstationen zum Durchführen einer Drahtlos-Kommunikation gemäß einem Paketübermittlungssystem, das Drahtlos-Bänder durch CSMA/CA zuweist, aufweisend:
einen Übermittlungsschritt der Drahtlos-Kommunikationsstation, der folgendes übermittelt: die Sammelsende-Empfangsinformationen an den Zugangspunkt, um anzuzeigen, ob die Drahtlos-Kommunikationsstation ein Sammelsendepaket empfängt oder nicht, und die Kommunikationsfunktions-Informationen, um anzuzeigen, ob die Kommunikationsfunktion für die Drahtlos-Kommunikationsstation zum Durchführen der Drahtlos-Kommunikation auf einen intermittierenden Empfangsmodus eingestellt ist oder nicht,
einen Extraktionsschritt des Zugangspunktes, der aus dem Paket, das im Übermittlungsschritt von der Drahtlos-Kommunikationsstation an den Zugangspunkt übermittelt wurde, extrahiert: Identifikationsinformationen zum Identifizieren der Drahtlos-Kommunikationsstation, die das Paket übermittelt hat, Sammelsende-Empfangsinformationen und Kommunikationsfunktions-Informationen, und
einen Übermittlungs-Steuerschritt des Zugangspunktes, der einen Übermittlungstakt des Sammelsendepaketes an die Drahtlos-Kommunikationsstation basierend auf den Identifikationsinformationen, den Sammelsende-Empfangsinformationen und den Kommunikationsfunktions-Informationen, die in dem Extraktionsschritt extrahiert werden, steuert, und
**gekennzeichnet durch** einen Einstellungs-Aufhebungsschritt der Drahtlos-Kommunikationsstation, der den intermittierenden Empfangsmodus aufhebt, wenn die Kommunikationsfunktion auf den intermittierenden Empfangsmodus eingestellt ist, wenn eine Einstellung zum Starten des Empfangens eines Sammelsendepaketes eingegeben wird, und der die Kommunikationsfunktion auf den intermittierenden Empfangsmodus einstellt, wenn eine Einstellung zum Beenden des Empfangens des Sammelsendepaketes eingegeben wird.

11. Ein Drahtlos-Kommunikationsverfahren für eine Drahtlos-Kommunikationsstation zum Durchführen einer Drahtlos-Kommunikation mit einem Zugangspunkt gemäß einem Paketübermittlungssystem, das Drahtlos-Bänder durch CSMA/CA zuweist, aufweisend:
einen Übermittlungsschritt der Drahtlos-Kommunikationsstation, der folgendes an den Zugangspunkt übermittelt: Sammelsende-Empfangsinformationen, um anzuzeigen, ob die Drahtlos-Kommunikationsstation ein Sammelsendepaket empfängt oder nicht, und Kommunikationsfunktions-Informationen, um anzuzeigen, ob die Kommunikationsfunktion für die Drahtlos-Kommunikationsfunktion zum Durchführen der Drahtlos-Kommunikation auf einen intermittierenden Empfangsmodus eingestellt ist oder nicht, und
**gekennzeichnet durch** einen Einstellungs-Aufhebungsschritt der Drahtlos-Kommunikationsstation, der den intermittierenden Empfangsmodus aufhebt, wenn die Kommunikationsfunktion auf den intermittierenden Empfangsmodus eingestellt ist, wenn eine Einstellung zum Starten des Empfangens eines Sammelsendepaketes eingegeben wird, und der die Kommunikationsfunktion auf den intermittierenden Empfangsmodus einstellt, wenn eine Einstellung zum Beenden des Empfangens des Sammelsendepaketes eingegeben wird.

## Revendications

1. Système de communication sans fil (100) comprenant un point d'accès (AP1) pour exécuter une communication sans fil selon un système de transmission de paquet qui attribue des bandes sans fil par CSMA/CA, et une ou plusieurs stations de communication sans fil (STA1, STA2, STA3, STA4, STA5) ;
dans lequel la station de communication sans fil comprend :
une unité de génération d'informations de réception de diffusion groupée (202) pour générer un paquet qui comprend des informations de réception de diffusion groupée afin d'indiquer si un paquet de diffusion groupée doit être reçu ou pas ;
une unité d'émission d'informations de réception de diffusion groupée (201) pour émettre vers le point d'accès un paquet qui est généré par l'unité de génération d'informations de réception de diffusion groupée, et qui comprend les informations de réception de diffusion groupée ;
une unité de génération d'informations d'exécution de communication (202) pour générer un paquet qui comprend des informations d'exécution de communication afin d'indiquer si l'exécution de communication de la communication sans fil est réglée ou pas sur un mode de réception intermittente ; et
une unité d'émission d'informations d'exécution de communication (201) pour émettre vers le point d'accès un paquet qui est généré par l'unité de génération d'informations d'exécution de communication, et qui comprend les informations d'exécution de communication ; et
le point d'accès comprend :
une unité de réception (301) pour recevoir un paquet émis par la station de communication sans fil ;
une unité d'extraction (302) pour extraire des informations d'identification afin d'identifier la station de communication sans fil qui a émis le paquet, les informations de réception de diffusion groupée et les informations d'exécution de communication à partir du paquet reçu par l'unité de réception ; et
une unité de commande d'émission (304) pour commander une synchronisation d'émission d'un paquet de diffusion groupée vers la station de communication sans fil sur la base des informations d'identification, des informations de réception de diffusion groupée et des informations d'exécution de communication, qui sont extraites par l'unité d'extraction ; et
**caractérisé en ce que** la station de communication sans fil comprend en outre une unité d'annulation de réglage (205) pour annuler le mode de réception intermittente si l'exécution de communication est réglée sur le mode de réception intermittente lorsqu'un réglage pour commencer la réception d'un paquet de diffusion groupée est entré, et pour régler l'exécution de communication sur le mode de réception intermittente si un réglage pour terminer la réception du paquet de diffusion groupée est entré.

2. Système de communication sans fil selon la revendication 1, comprenant en outre une unité de génération d'informations de table (303) pour générer des informations de table qui associent les informations d'identification, les informations de réception de diffusion groupée et les informations d'exécution de communication qui sont extraites par l'unité d'extraction, et pour stocker les informations de table dans une mémoire, dans lequel :
l'unité de commande d'émission commande la synchronisation d'émission sur la base des informations de table stockées dans la mémoire par l'unité de génération d'informations de table.

3. Système de communication sans fil selon la revendication 1 ou 2, dans lequel les informations de réception de diffusion groupée sont représentées par 1 bit d'informations afin d'indiquer si un paquet de diffusion groupée doit être reçu ou pas.

4. Système de communication sans fil selon la revendication 1 ou 2, dans lequel les informations de réception de diffusion groupée indiquent une partie ou la totalité d'une adresse de diffusion groupée d'un paquet de diffusion groupée cible de réception.

5. Système de communication sans fil selon l'une quelconque des revendications 1 à 4, dans lequel l'unité de génération d'informations de réception de diffusion groupée génère un paquet de demande d'association qui comprend les informations de réception de diffusion groupée.

6. Système de communication sans fil selon l'une quelconque des revendications 1 à 4, dans lequel l'unité de génération d'informations de réception de diffusion groupée génère un paquet de données ou un paquet de commande qui comprend les informations de réception de diffusion groupée.

7. Système de communication sans fil selon l'une quelconque des revendications 1 à 4, dans lequel l'unité de génération d'informations de réception de diffusion groupée génère un paquet de demande qui comprend les informations de réception de diffusion groupée et qui demande la réception d'un paquet de diffusion groupée.

8. Système de communication sans fil selon l'une quelconque des revendications 1 à 7, dans lequel, lorsqu'un paquet de diffusion groupée émis par un réseau de communication extérieur est reçu par l'unité de réception du point d'accès,
s'il y a au moins une station de communication sans fil réglée pour recevoir un paquet de diffusion groupée reçu par l'unité de réception et réglée sur le mode de réception intermittente, l'unité de commande d'émission du point d'accès tamponne le paquet de diffusion groupée reçu par l'unité de réception dans une mémoire du point d'accès, et commande la synchronisation d'émission afin d'émettre le paquet de diffusion groupée tamponné à un cycle d'émission d'une balise DTIM ; et
s'il n'y a pas de station de communication sans fil réglée pour recevoir un paquet de diffusion groupée reçu par l'unité de réception et réglée sur le mode de réception intermittente, l'unité de commande d'émission du point d'accès commande la synchronisation d'émission afin d'émettre le paquet de diffusion groupée reçu par l'unité de réception sans utiliser la balise DTIM.

9. Station de communication sans fil (STA1, STA2, STA3, STA4, STA5) qui exécute une communication sans fil avec un point d'accès (AP1), selon un système de transmission de paquet qui attribue des bandes sans fil par CSMA/CA, comprenant :
une unité de génération d'informations de réception de diffusion groupée (202) pour générer un paquet qui comprend des informations de réception de diffusion groupée afin d'indiquer si un paquet de diffusion groupée doit être reçu ou pas ;
une unité d'émission d'informations de réception de diffusion groupée (201) pour émettre vers le point d'accès un paquet qui est généré par l'unité de génération d'informations de réception de diffusion groupée, et qui comprend des informations de réception de diffusion groupée ;
une unité de génération d'informations d'exécution de communication (202) pour générer un paquet qui comprend des informations d'exécution de communication afin d'indiquer si l'exécution de communication de la communication sans fil est réglée ou pas sur un mode de réception intermittente ; et
une unité d'émission d'informations d'exécution de communication (201) pour émettre vers le point d'accès un paquet qui est généré par l'unité de génération d'informations d'exécution de communication, et qui comprend les informations d'exécution de communication ; et
**caractérisé en ce que** la station de communication sans fil comprend en outre une unité d'annulation de réglage (205) pour annuler le mode de réception intermittente si l'exécution de communication est réglée sur le mode de réception intermittente lorsqu'un réglage pour commencer la réception d'un paquet de diffusion groupée est entré, et pour régler l'exécution de communication sur le mode de réception intermittente si un réglage pour terminer la réception du paquet de diffusion groupée est entré.

10. Procédé de communication sans fil destiné à ce qu'un point d'accès et une ou plusieurs stations de communication sans fil exécutent une communication sans fil selon un système de transmission de paquet qui attribue des bandes sans fil par CSMA/CA, comprenant :
une étape d'émission de la station de communication sans fil consistant à émettre, vers le point d'accès, des informations de réception de diffusion groupée afin d'indiquer si la station de communication sans fil reçoit ou pas un paquet de diffusion groupée, et des informations d'exécution de communication afin d'indiquer si l'exécution de communication pour que la station de communication sans fil exécute la communication sans fil, est réglée ou pas sur un mode de réception intermittente ;
une étape d'extraction du point d'accès consistant à extraire des informations d'identification afin d'identifier la station de communication sans fil qui a émis le paquet, les informations de réception de diffusion groupée et les informations d'exécution de communication, à partir du paquet émis par la station de communication sans fil vers le point d'accès dans l'étape d'émission ; et
une étape de commande d'émission du point d'accès consistant à commander une synchronisation d'émission d'un paquet de diffusion groupée vers la station de communication sans fil sur la base des informations d'identification, des informations de réception de diffusion groupée et des informations d'exécution de communication, qui sont extraites dans l'étape d'extraction ; et
**caractérisé par** une étape d'annulation de réglage de la station de communication sans fil consistant à annuler le mode de réception intermittente si l'exécution de communication est réglée sur le mode de réception intermittente lorsqu'un réglage pour commencer la réception d'un paquet de diffusion groupée est entré, et à régler l'exécution de communication sur le mode de réception intermittente si un réglage pour terminer la réception de paquet de diffusion groupée est entré.

11. Procédé de communication sans fil destiné à ce qu'une station de communication sans fil exécute une communication sans fil avec un point d'accès, selon un système de transmission de paquet qui attribue des bandes sans fil par CSMA/CA, comprenant :
une étape d'émission de la station de communication sans fil consistant à émettre, vers le point d'accès, des informations de réception de diffusion groupée afin d'indiquer si la station de communication sans fil reçoit ou pas un paquet de diffusion groupée, et des informations d'exécution de communication afin d'indiquer si l'exécution de communication pour que la station de communication sans fil exécute la communication sans fil, est réglée ou pas sur un mode de réception intermittente ; et
**caractérisé par** une étape d'annulation de réglage de la station de communication sans fil consistant à annuler le mode de réception intermittente si l'exécution de communication est réglée sur le mode de réception intermittente lorsqu'un réglage pour commencer la réception d'un paquet de diffusion groupée est entré, et à régler l'exécution de communication sur le mode de réception intermittente si un réglage pour terminer la réception du paquet de diffusion groupée est entré.
